# EUROPEAN PATENT SPECIFICATION

(11) **EP 2 554 251 B1**
(45) Date of publication and mention of the grant of the patent: **14.11.2018**
(21) Application number: 11765220.6
(22) Date of filing: 01.04.2011
(51) Int. Cl.: B01J 19/24, B01F 5/00, B01J 4/00

(54) **PIPE TYPE CIRCULATION-BASED REACTION APPARATUS**
VORRICHTUNG FÜR REAKTIONEN AUF BASIS VON RÖHRENZIRKULATIONEN
DISPOSITIF RÉACTIONNEL BASÉ SUR UN CIRCUIT FLUIDIQUE DE TYPE TUYAUTERIE

(30) Priority: 01.04.2010 JP 2010085507
(43) Date of publication of application: 06.02.2013
(73) Proprietor: Nisso Engineering Co., Ltd., Tokyo 101-0051 (JP)
(72) Inventor: KOBAYASHI, Eiichiro, Tokyo 101-0051 (JP)
(74) Representative: Goulard, Sophie
(86) International application number: PCT/JP2011/001978
(87) International publication number: WO 2011/125318

(56) References cited:
- EP-A1- 2 067 524
- EP-A1- 2 431 091
- WO-A1-2004/063248
- WO-A1-2008/038763
- WO-A1-2008/043860
- WO-A1-2009/068920
- JP-A- 10 249 178
- JP-A- 53 110 153
- JP-A- 59 049 829
- JP-A- 62 237 931
- JP-A- 2007 268 487

## Description

### TECHNICAL FIELD

The present invention relates to a tubular flow reactor. More particularly, the present invention pertains to a tubular flow reactor configured to provide an increased contact area between reactants immediately after confluence thereof and avoid a reduction in yield of a reaction product owing to nonuniformity of concentration.

### BACKGROUND ART

Development of micrometer- and millimeter-sized reactors, for example, has been under way in recent years to provide flow-type reactors for reacting liquids like reagents.

Simplest forms of microreactors include T- or Y-shaped reactors. This kind of reactor includes a plate in which a T- or Y-shaped groove, approximately 40 µm deep and 100 µm wide, is formed with the groove covered by a flat plate and connected to tubes. In the plate serving as a lid, there are formed a total of 3 holes, one each at ends of the T- or Y-shape. Two kinds of reactants which are simultaneously introduced from upper left and right ends of the T- or Y-shape merge at a middle point and, while flowing downstream, produce a reaction product which is discharged from a lower end. If flow rates of the reactants are equal to each other, the reactants begin to react at a junction point of the T- or Y-shape.

The inside diameter of each flow channel of the microreactor is so small that the flow channel has a small Reynolds number and a fluid runs in a laminar flow. Since little convection occurs in radial directions of a tube in a laminar flow region, the two kinds of reactants introduced are likely to flow separately on left and right sides immediately after confluence in the T- or Y-shape tube with a boundary of the two reactants located approximately at the middle of a descending tube portion. A contact surface between the two reactants flowing separately on the left and right sides is formed only along a surface of the relevant boundary. The two reactants go into contact with each other as a result of diffusion that occurs on this boundary surface. Under such conditions, however, the two reactants go into mutual contact so infrequently that concentrations of the reactants are likely to become nonuniform. There may arise a situation where the reactants reach an outlet of the reactor while maintaining the boundary surface therebetween in certain cases. If mixing is insufficient, there may occur a case where a product produced by reaction further reacts with the reaction product, for example, producing a by-product and thus resulting in a reduction in yield. Also, if the flow rates of the two kinds of reactants greatly differ from each other, such as if a volume ratio of liquid A to liquid B is 1:10, the boundary surface between the two liquids deviates to the side of liquid A. In this case, liquid B goes into contact with liquid A with an extremely small probability and, therefore, part of liquid B may reach the outlet of the reactor without going into contact with liquid A. Such a phenomenon will occur notably often especially when any of the reactants has a large viscosity.

As an example, PATENT DOCUMENT 1 proposes an arrangement to dispose an obstacle at a flow-merging site of a Y-shape tube as a method for improving a mixing state immediately after confluence of fluids. According to this method, however, there may arise a situation where it is impossible to obtain a sufficient mixing state, resulting in a reduction in yield owing to nonuniformity of concentration.

Also, PATENT DOCUMENT 2 discloses a microreactor in which a plurality of fluids are led through respective fluid feed channels to merge in one reaction channel so that the fluids being conducted react with each other. In this microreactor, the reaction channel is formed as a spiral reaction channel by cutting a spiral screw thread either on an outer surface of a round-bar core member or on an inner surface of an outer cylinder member having a circular cross section and fitting the outer surface of the core member and the inner surface of the outer cylinder member in close contact with each other. This microreactor involves a complex structure of the spiral screw thread (static mixing means: static mixer) on which scale or the like can build up in large quantities, requiring a great deal of effort in disassembling, cleaning and reassembling an apparatus. There can also be a case where a boundary surface is formed along spiral reaction channel and, therefore, making it unfeasible to increase mixing efficiency as expected.

Further, PATENT DOCUMENT 3 discloses a continuous mixing reactor including at least two raw material solution feed tubes, a cylindrical mixing reaction tube and a discharge tube, wherein at least two kinds of raw material solutions fed through the raw material solution feed tubes into the mixing reaction tube are mixed to produce a reaction. In this continuous mixing reactor, the at least two raw material solution feed tubes are attached to the mixing reaction tube independently of each other in such a manner that the at least two raw material solutions fed from the at least two raw material solution feed tubes form a swirling flow along an inside wall of the mixing reaction tube. The mixing reaction tube and the discharge tube are interconnected on a common axis, and no agitation means is provided inside the mixing reaction tube. In this PATENT DOCUMENT 3, the expression "the raw material solution feed tubes are attached in a manner to form a swirling flow" means that the feed tubes are disposed along a tangential direction of the mixing reaction tube. In the reactor of PATENT DOCUMENT 3, however, stagnation may occur in a central part of the swirling flow in the mixing reaction tube, resulting in a reduction in yield owing to nonuniformity of concentration.

Additionally, PATENT DOCUMENT 4 discloses a micromixer provided with fluid inlets which produce a swirling flow in the same direction within a mixing tank by introduction of fluids, where the individual fluid inlets having a capability to continuously mix a plurality of microscopic fluid streams that exist on a swirling flow surface substantially in a first swirling cycle created by the fluids introduced into the mixing tank.

PATENT DOCUMENT 5 discloses a fluid mixer including an inner tube disposed within a cylindrical mixing chamber in contact therewith along a circumferential direction, with an inlet tube opening located at an open end side of the mixing chamber and the inner tube extending toward a terminal end of the mixing chamber, and a discharging tube connected to the inner tube.

PATENT DOCUMENT 6 discloses a mixer including a cylindrical member which constitutes a mixing chamber, an input tube which is disposed face to face with a lower part of a side wall of the cylindrical member on the same plane therewith so as to introduce a solution into the cylindrical member from a tangential direction thereof, and a discharge tube disposed at an upper part of the cylindrical member.

WO 2004/063248 A1 discloses a reactor to be used for a solid-state polymerization of polyethylene terephthalate, the turbo-heater comprises a cylindrical tubular body, a bladed rotor, a heating jacket, an inlet opening and an outlet opening, and the rotor blades of the bladed rotor are helicoidally arranged and oriented so as to centrifuge and simultaneously advance towards the exit the product subjected to the treatment. EP 2067524 A1 discloses a swirling flow producing apparatus.

### PRIOR ART LITERATURES

### PATENT DOCUMENTS

PATENT DOCUMENT 1: JP 2007-113433 A
PATENT DOCUMENT 2: JP 2005-46652 A
PATENT DOCUMENT 3: JP 2008-168168 A
PATENT DOCUMENT 4: JP 2006-167600 A
PATENT DOCUMENT 5: JP S59-49829 A
PATENT DOCUMENT 6: JP S56-39121 U

### SUMMARY OF THE INVENTION

### PROBLEMS TO BE SOLVED BY THE INVENTION

It is an object of the present invention to provide a tubular flow reactor configured to provide an increased contact area between reactants immediately after confluence thereof and avoid a reduction in yield of a reaction product owing to nonuniformity of concentration.

### MEANS FOR SOLVING THE PROBLEMS

After strenuously studying a solution to accomplish the aforementioned object, the inventors have found that it is possible to increase a contact area between reactants immediately after confluence thereof and avoid a reduction in yield of a reaction product owing to nonuniformity of concentration by connecting two fluid feed channels made of a double-walled tube having an inner tube and an outer tube so as to communicate with an inlet of an annular reaction channel and feeding liquid A and liquid B into the annular reaction channel through the fluid feed channel a made of an internal cavity of the inner tube and the fluid feed channel b made of an internal cavity formed between the inner tube and the outer tube, respectively.

The present invention has been achieved as a result of further studies carried out by the inventors on the ground of this finding.

Specifically, the present invention includes the following aspects.
(1) A tubular flow reactor comprising: at least two fluid feed channels made of a multi-walled tube for feeding at least two kinds of fluids to be used in a reaction, a reaction channel having an annular cross section that can cause the fluids to react while flowing the same therethrough, the reaction channel being made of an outer cylinder member and a core member, the core member having an internal cavity; the internal cavity through which a refrigerant or heating medium can be circulated to allow heat-exchange with the fluids flowed through the reaction channel, wherein a movement of a substance is restricted between the internal cavity and the reaction channel (56); and a fluid discharge channel for discharging a reaction product, wherein the fluid feed channels are so connected so as to communicate with an inlet of the reaction channel, and the fluid discharge channel is so connected so as to communicate with an outlet of the reaction channel.
(2) The tubular flow reactor according to (1) above, wherein the fluid feed channels are connected to the annular reaction channel along a peripheral tangential direction thereof.
(3) The tubular flow reactor according to (1) above, wherein the fluid feed channels are connected to the annular reaction channel along a direction generally perpendicular to a peripheral surface thereof.
(4) The tubular flow reactor according to any one of (1) to (3) above, wherein an outermost tube of the multi-walled tube has an inside diameter 0.5 to 1.5 times the average thickness of the annular reaction channel.
(5) The tubular flow reactor according to any one of (1) to (4) above, wherein the annular reaction channel is formed by passing a tube whose outer surface has a circular cross section into an outer cylinder member whose inner surface has a circular cross section.

### ADVANTAGEOUS EFFECTS OF THE INVENTION

According to the tubular flow reactor of the present invention, a contact area between reactants immediately after confluence thereof is increased and a reduction in yield of a reaction product owing to nonuniformity of concentration is avoided.

If two or more kinds of fluids are introduced into the annular reaction channel along the peripheral tangential direction thereof, the fluids flow along the periphery of the annular reaction channel as if in a swirling motion. This makes it possible to provide a sufficiently large contact area between reactants immediately after confluence thereof and suppress nonuniformity of concentration to a minimum level as a consequence even when the amounts of inflow of the two or more fluids greatly differ from one another.

### BRIEF DESCRIPTION OF THE DRAWINGS

[FIG. 1] a schematic diagram depicting a cross section parallel to a longitudinal direction of a tubular flow reactor according to one embodiment of the present invention.
[FIG. 2] a schematic diagram depicting a cross section perpendicular to the longitudinal direction of the tubular flow reactor depicted in FIG. 1.
[FIG. 3] a schematic diagram depicting a cross section parallel to a longitudinal direction of a tubular flow reactor according to another embodiment of the present invention.
[FIG. 4] a schematic diagram depicting a cross section perpendicular to the longitudinal direction of the tubular flow reactor depicted in FIG. 3.
[FIG. 5] a schematic diagram depicting a cross section parallel to a longitudinal direction of a tubular flow reactor according to another embodiment of the present invention.
[FIG. 6] a schematic diagram depicting a cross section perpendicular to the longitudinal direction of the tubular flow reactor depicted in FIG. 5.
[FIG. 7] a schematic diagram depicting an example of flow rate control operation performed when fluids are alternately introduced.
[FIG. 8] a chart representing mixing performance evaluated by the Ehrfeld method of the tubular flow reactor of the present invention used as a practical example.

### EMBODIMENTS FOR CARRYING OUT THE INVENTION

Tubular flow reactors of the present invention are described with reference to embodiments depicted in the drawings. Meanwhile, the present invention is not limited to these embodiments and should be construed as including alterations, additions and modifications within a range complying with the scope and objects of the invention.

### <FIRST EMBODIMENT>

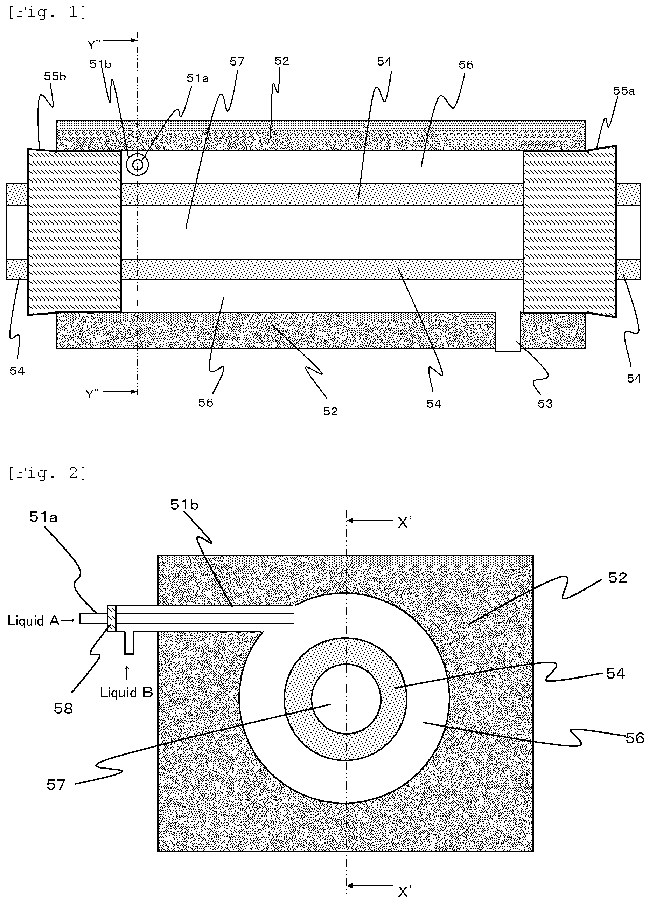

FIG. 1 is a view taken in the direction of an arrow X' of a tubular flow reactor according to one embodiment of the present invention, and FIG. 2 is a view taken in the direction of an arrow Y" of the tubular flow reactor depicted in FIG. 1.

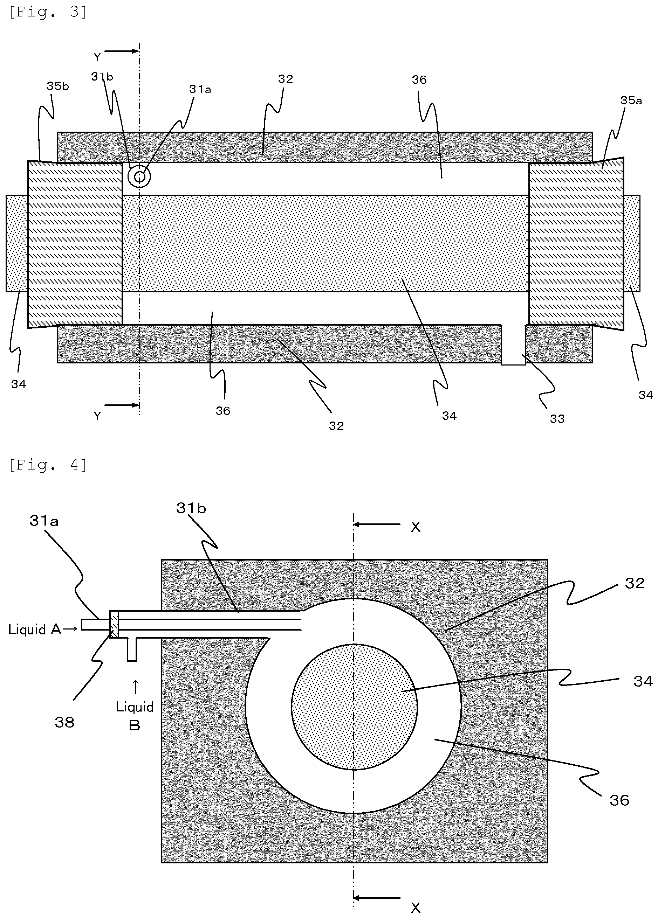

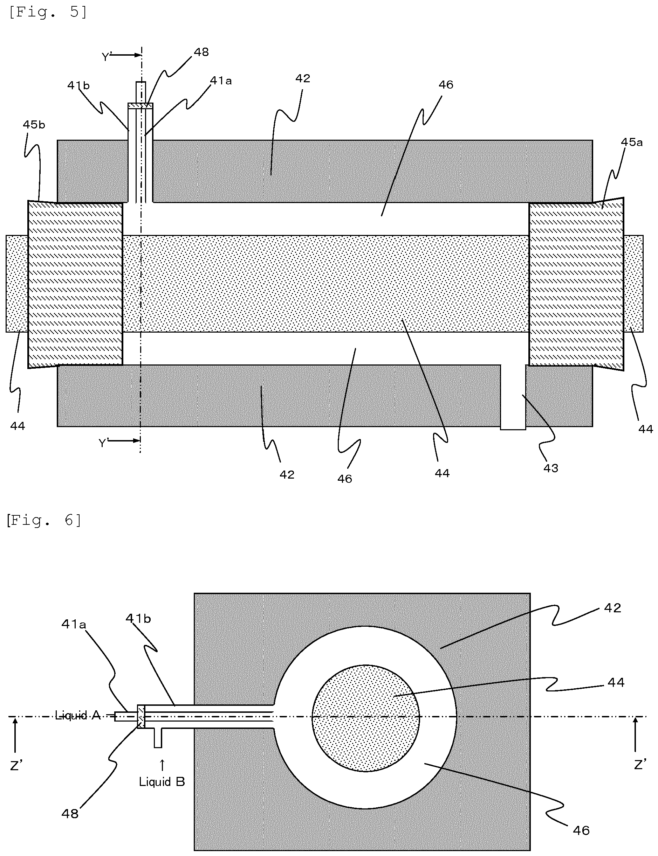

The reactor depicted in FIG. 1 has a double-walled tube structure comprising a reaction channel (56) made of an outer cylinder member 52 and a core member 54, the core member (54) having an internal cavity (57)). While the reactor depicted in FIG. 1 has the double-walled tube structure, the reactor may be reconfigured to have a triple-walled tube structure with an additional tube provided on the outside of the outer cylinder member 52 where necessary. While the outer cylinder member 52 is formed by boring a hole through a prism to create an internal cavity therein, the invention is not limited thereto. For example, the outer cylinder member 52 may be configured by using straight tube, or by forming a groove in a flat plate and attaching a lid to the flat plate to create an internal cavity which allows a fluid to pass through. Also, while the core member depicted in the embodiment of FIG. 1 is configured with a straight tube, the invention is not limited thereto. The core member may be made of a cylinder 34, 44 having no internal cavity as depicted in FIG. 3 or 5, for example. What is essentially important in the reactor of this invention is that a reaction channel 36, 46, 56 should at least have an annular shape in cross section.

Meanwhile, although the outer cylinder member and the core member are illustrated as being disposed generally on a common axis, the reactors of the present invention are not limited thereto and include reactors in which the core member is off-centered with respect to the outer cylinder member.

Neither the outer cylinder member nor the core member is particularly limited in size. In the case of a micrometer-sized or millimeter-sized reactor, an average clearance between an inner surface of the outer cylinder member and an outer surface of the core member, that is an average thickness of the annular reaction channel, is preferably 50 µm to 2. 5 mm, and in particular preferably 50 µm to 1 mm. Also, the inside diameter of the outer cylinder member is preferably 3 mm to 30 mm and the outside diameter of the core member is preferably 1 mm to 25 mm from a viewpoint of being able to manufacture the reactors by use of commercially available tubes, connectors, and the like.

Thicknesses and material properties of individual components may be appropriately chosen from such viewpoints as strength, thermal conductivity, corrosion resistance, heat resistance, and the like. Materials which may be selected from the viewpoints of corrosion resistance and heat resistance would include titanium metal, alloys, such as titanium-base alloy, nickel-base alloy (e.g., Hastelloy (registered trademark), Inconel (registered trademark), cobalt-base alloy (e.g., Stellite (registered trademark)) and stainless steel, as well as engineering plastics, for example. In a case where the core member is composed of a tube, movement of a substance between an internal cavity 57 of the core member and an internal cavity 56 of the outer cylinder member are normally restricted. It is however possible to configure the core member with a substance-permeable material to allow the movement of a substance between the internal cavity of the core member and the internal cavity of the outer cylinder member so that the reactor can be used for performing dialysis in the field of biochemistry, for example. Similarly, in the case of a reactor having the triple-walled tube structure, it is possible to configure the outer cylinder member also with a substance-permeable material to allow the movement of a substance between the internal cavity of the outer cylinder member and an internal cavity of a tube on the outside of the outer cylinder member.

Connected to one end of the outer cylinder member is a multi-walled tube (a double-walled tube as illustrated in FIG. 1) that connects to the reaction channel 56. This multi-walled tube is used for feeding two or more kinds of fluids to be used in a reaction.

Referring to FIG. 1, a fluid feed channel 51a is made of an internal cavity of an inner tube of the double-walled tube and a fluid feed channel 51b is made of an internal cavity formed between the inner tube and an outer tube of the double-walled tube. While FIG. 1 illustrates an arrangement in which the fluid feed channels are formed by the double-walled tube, it is possible to employ an arrangement in which the fluid feed channels are configured with three or more tubes having different thicknesses. Alternatively, it is possible to employ an arrangement in which two or more inner tubes are passed through an internal cavity of an outer tube. While an outlet side end of the inner tube and an outlet side end of the outer tube are aligned to the same position in the reactor depicted in FIG. 1, the inner tube may be made longer or shorter than the outer tube. It is possible to structure the fluid feed channels by boring a hole through a prism to create an internal cavity therein through which a fluid can flow, passing a slender tube through the internal cavity, and fixing the tube by a stopper 58, for example.

Fluids individually introduced through the two fluid feed channels 51a, 51b are caused to merge at an inlet of the annular reaction channel. While the individual fluid feed channels and the reaction channel may be connected at any angle with respect to a peripheral surface of the annular reaction channel, in FIG. 1, the fluid feed channels are connected to the annular reaction channel along a peripheral tangential direction thereof. The "peripheral tangential direction" does not refer simply to the direction of a tangent that is mathematically defined in a strict sense but also refer to the direction of a substantial tangent achieved by actual machining operation.

Meanwhile, the number of connected channels of the multi-walled tube is not limited to what is illustrated in the drawings. While the multi-walled tube is connected to one site at an upper-left position in the reactor depicted in FIG. 2, there may be provided another multi-walled tube at another position. Referring to FIG. 2, for example, it is possible to provide multi-walled tubes at two sites at the upper-left and lower-right positions in such a manner that fluid feed channels made of the multi-walled tubes are connected along the peripheral tangential direction or along a direction generally perpendicular to the peripheral surface. Also, the positions where the multi-walled tubes are connected may be offset from each other along a longitudinal direction of the outer cylinder member. For example, this arrangement may be such that a first multi-walled tube is connected to a leftmost end of the outer cylinder member and a second multi-walled tube is connected at a position slightly shifted to a downstream side from the first multi-walled tube.

Although the multi-walled tube is not particularly limited in diameter, it is preferable that an outermost tube of the double-walled tube have an inside diameter 0.5 to 1.5 times the average thickness of the annular reaction channel. The cross-sectional area of each of the two or more fluid feed channels of the annular reaction channel is not particularly limited. If the fluid feed channels are configured to have the same cross-sectional area, the individual fluid feed channels passes fluids at an equal average flow velocity at outlets thereof when the fluids are fed at the same flow rate. If the average flow velocity on an outer side and the average flow velocity on an inner side differ from each other at an output port of the multi-walled tube, convection could easily occur in certain cases.

The two or more kinds of fluids may be fed continuously or alternately into the reaction channel. Examples of devices which can perform such flow rate control operation include a plunger pump and a syringe pump. A total flow rate of the fluids flowing through the reaction channel is determined as appropriate according to a chemical reaction rate, a dwell time, the diameter of the tube, the length of the tube, and the like.

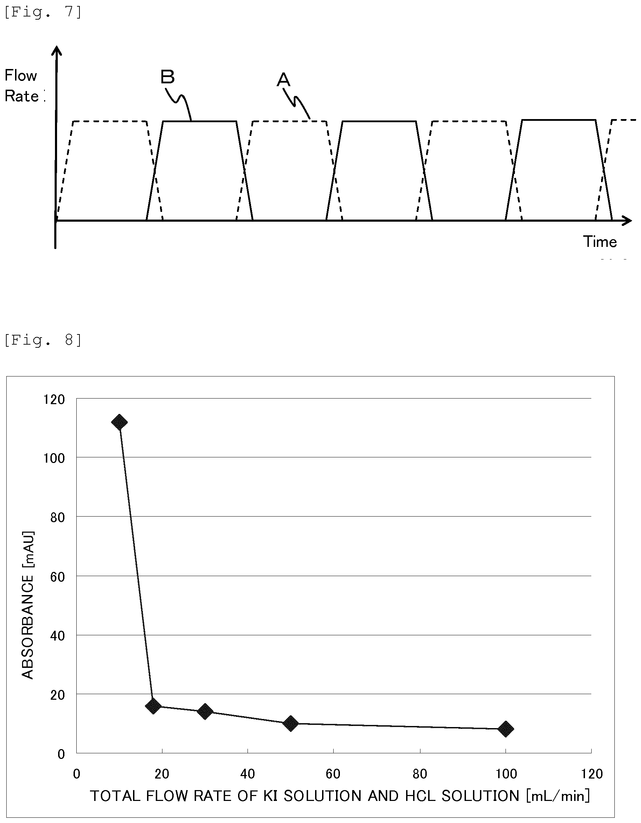

When the two or more kinds of fluids are alternately introduced into the reaction channel, it is possible to intermittently feed liquid A (broken lines in FIG. 7) and liquid B (solid lines in FIG. 7) through the fluid feed channel 51a and the fluid feed channel 51b, respectively, by performing flow rate control operation depicted in FIG. 7. It is preferable to perform the flow rate control operation so as to keep the sum of the flow rate of liquid A and the flow rate of liquid B constant at points of switching between liquid A and liquid B so that the total flow rate remains unchanged. Also, when liquid A, liquid B and liquid C are used, for example, it is possible to repeatedly feed liquid A, liquid B and liquid C in successive turns or to repeatedly feed a combination of liquid A and liquid B, a combination of liquid B and liquid C and a combination of liquid C and liquid A in successive turns. Flow rate patterns are not limited to these examples. In a case where the fluids are alternately introduced, it is possible to appropriately select intervals of switching of the two or more kinds of fluids to be introduced in accordance with the volumetric capacity of the reaction channel, for instance. As an example, it is possible to switch among the two or more kinds of fluids to be introduced at intervals of a few milliseconds to a few seconds.

The flow rates of the individual fluids are not particularly restricted. For example, average amounts of inflow of the individual fluids may be made equal to one another. In a case where the average amounts of inflow are equalized, such as when equimolar reactants contained respectively in liquid A and liquid B react with each other, it is possible to equalize concentrations of the reactants contained in liquid A and liquid B. Also, in a case where the reactants react at a molar ratio of 2:1, it is possible to make the concentrations of the reactants contained respectively in liquid A and liquid B to have a ratio of 2:1. Meanwhile, the aforementioned ratio of the concentrations may be modified taking into consideration the reactivity and reverse reaction of the reactants, for instance.

The reactor of the present invention is applicable also to a case where the average amounts of inflow of the individual fluids greatly differ from one another. When two kinds of fluids are used to produce a reaction, for example, the ratio of volumetric flow rates of the two kinds of fluids is preferably 1:10 to 10:1, more preferably 1:7 to 7:1. In the case of a conventional microreactor, fluids are mixed under laminar flow conditions, so that mixing efficiency deteriorates when the ratio of volumetric flow rates of two kinds of fluids greatly differ from each another. In contrast, the reactor of the present invention provides an increased mixing efficiency by feeding the fluids from the multi-walled tube into the annular reaction channel. Therefore, even when the amounts of inflow of the two or more fluids greatly differ from one another, the reactor of the present invention can provide a sufficiently large contact area between the reactants immediately after confluence thereof, making it possible to suppress nonuniformity of concentration to a minimum level as a consequence.

In a case where the fluid feed channels are connected along the peripheral tangential direction, fluids introduced are caused to flow along the longitudinal direction while turning along the periphery of the annular reaction channel within the outer cylinder member. In a case where the fluid feed channels are connected along the direction generally perpendicular to the peripheral surface, on the other hand, fluids introduced are caused to hit against the core member and flow along the longitudinal direction while spreading left and right along the periphery of the annular reaction channel. As a result, the reactants chemically react with each other, producing a reaction product.

In the reactor of the present embodiment, the internal cavity of the outer cylinder member is partitioned by the core member, forming an annular cross section. The fluids fed through the multi-walled tube are supposed to produce a complex distribution of flow velocities within the annular reaction channel. It is presumed that this complex distribution of flow velocities serves to increase the contact area between the reactants immediately after confluence thereof in the reactor of this invention, thereby preventing a reduction in yield of the reaction product owing to nonuniformity of concentration.

While the inner surface of the outer cylinder member and the outer surface of the core member are smooth surfaces with no undulations formed thereon in the reactor of the present embodiment, undulations may be provided on the inner surface of the outer cylinder member and/or the outer surface of the core member. Examples of the undulations include spiral grooves or spiral ridges formed along a flow direction of a swirling flow, grooves or ridges formed along a direction in which the swirling flow is impeded like those formed on a baffle plate, mesh-like grooves or ridges formed in a diamond or hexagonal pattern, protrusions or hollows formed in a spotted pattern, and so on.

It is possible to set the length of the reaction channel as appropriate in the reactor of this invention in accordance with the chemical reaction rate, the flow rate, or the like. When performing a chemical reaction at a low reaction rate, it is possible to increase the length of the reaction channel, and when performing a chemical reaction at a high reaction rate, on the contrary, it is possible to decrease the length of the reaction channel. It is possible to control reaction temperature by circulating a refrigerant or a heating medium through the internal cavity of the core member (or through the tube on the outside of the outer cylinder member where necessary), thereby producing a heat exchange with a fluid flowed through the reaction channel.

The reaction product obtained is allowed to flow out through a fluid discharge channel 53 connected to the other end of the outer cylinder member. It is possible to connect another reactor (including another tubular flow reactor of the present invention) or an apparatus for purification, for example, downstream of the fluid discharge channel 53. Meanwhile, the number of the fluid discharge channel is not limited to one. There may be provided two or more fluid discharge channels, or the fluid discharge channel may separate into branches at a downstream portion.

In the apparatus depicted in FIG. 1, the core member is longer than the outer cylinder member and sticks out beyond both ends thereof. The apparatus of the present invention is not limited to this structure, however. For example, the reactor may be structured such that a right end of the core member is kept within the extension of the outer cylinder member, wherein the fluid which has been flowed through the internal cavity of the outer cylinder member is introduced into the internal cavity of the core member through an opening of the core member at the right end thereof, and the fluid flows in a leftward direction of the core member and is discharged through an opening of the core member at a left end thereof. In this case, the internal cavity of the core member has a role as a fluid discharge channel. Since the fluid of which flow is returned in this fashion continues to react within the internal cavity of the core member, it is possible to shorten the entire length of the reactor.

### <SECOND EMBODIMENT NOT PART OF THE INVENTION>

FIG. 3 is a view taken in the direction of an arrow X of a tubular flow reactor according to a second embodiment of the present invention, and FIG. 4 is a view taken in the direction of an arrow Y of the tubular flow reactor depicted in FIG. 3. The tubular flow reactor depicted in FIGS. 3 and 4 has the same structure as the first embodiment except that the core member is made of a cylinder 34 which substitutes for the round tube 54.

### <THIRD EMBODIMENT NOT PART OF THE INVENTION>

FIG.5 is a view taken in the direction of an arrow Z' of a tubular flow reactor according to a third embodiment of the present invention, and FIG. 6 is a view taken in the direction of an arrow Y' of the tubular flow reactor depicted in FIG. 5. In the tubular flow reactor depicted in FIGS. 5 and 6, fluid feed channels are connected along a direction generally perpendicular to the peripheral surface. As used in this invention, the expression "generally perpendicular" or "generally at right angles" means a range of 90 degrees ±45 degrees.

If the fluid feed channels are connected along the direction generally perpendicular to the peripheral surface, fluids introduced are caused to hit against the core member and spread left and right in the annular reaction channel, producing complex convection.

### EXAMPLE

Described next is a practical example which is cited for explaining the present invention more specifically. Incidentally, the scope of the invention is not limited by the below-described example.

Used as the practical example was the tubular flow reactor having a cross-sectional structure depicted in FIGS. 1 and 2. FIG. 1 is a view taken in the direction of the arrow X' of the reactor, and FIG. 2 is a view taken in the direction of the arrow Y" of the reactor. This reactor is configured with the outer cylinder member 52 and the core member 54. The core member 54 is passed through the internal cavity of the outer cylinder member 52, forming the annular reaction channel 56 between the outer cylinder member and the core member. Then, the fluid feed channels 51a, 51b made of the double-walled tube for introducing fluids used for reaction and the fluid discharge channel 53 are so connected as to communicate with the reaction channel. The fluid feed channels are connected to a left end of the outer cylinder member as depicted in FIG. 1 along the tangential direction of the annular reaction channel 56 from the upper-left position as depicted in FIG. 2. The fluid feed channel 51a is made of the internal cavity of the inner tube of the double-walled tube and the fluid feed channel 51b is made of the internal cavity existing between the inner tube and the outer tube of the double-walled tube.

The fluid discharge channel 53 is connected to a right end of the outer cylinder member.

The inside diameter of the outer cylinder member is 5.00 mm, the outside diameter of the core member 54 is 3.18 mm, and the average thickness of the annular reaction channel is 0.91 mm. The length of the reaction channel (from the outlets of the fluid feed channels to an inlet of the fluid discharge channel) is 70 mm.

The inside diameter of the outer tube of the double-walled tube is 0.50 mm, the outside diameter of the inner tube of the double-walled tube is 0.45 mm and the inside diameter of the inner tube of the double-walled tube is 0.23 mm, the double-walled tube constituting the fluid feed channels. The average thickness of the annular fluid feed channel 51b that exists between the inner tube and the outer tube of the double-walled tube is 0.025 mm.

The inside diameter of the fluid discharge channel is 1 mm.

In this reactor, the internal cavity 56, the fluid feed channel 51b and the fluid discharge channel 53 are formed by boring holes in a quadrangular prism made of stainless steel, a tube 54 made of stainless steel is passed through the internal cavity 56 and both ends of the tube 54 are fixed by stoppers 55a, 55b. The reactor was manufactured by passing a tube 51a made of stainless steel through an internal cavity 51b of the fluid feed channel and fixing one end of the tube 51a with the stopper 58.

### <EVALUATION 1 OF MIXING PERFORMANCE>

Mixing performance was evaluated by the Ehrfeld method based on Villermaux/Dushman Reaction (refer to Ehrfeld, W., et al., Ind. Eng. Chem. Res., 38, 1075-1082 (1999)).

Liquid B which was an aqueous solution of HCl (0.137 mol/L⁻¹) and liquid A which was a fluidic mixture of KI (0.016 mol/L⁻¹), KIO₃ (0.0032 mol/L⁻¹) and CH₃COONa (1.32 mol/L⁻¹) were fed into the reactor having a cross-sectional structure depicted in FIGS. 1 and 2 through the fluid feed channel 51b and the fluid feed channel 51a, respectively, at a ratio of flow rates of 1:1.

A liquid discharged from the fluid discharge channel 53 was subjected to measurement of ultraviolet absorbance (λ = 352 nm) by I₃⁻ to determine the mixing performance of the reactor. The principle of evaluation employed is described below.

As a result of mixing liquid A and liquid B, reactions expressed by reaction formulae (1) to (3) proceed.

CH₃COO⁻ + H⁺ ←→ CH₃COOH (1)

5I⁻ + IO₃⁻ + 6H⁺ ←→ 3I₂ + 3H₂O (2)

I₂ + I⁻ ←→ I₃⁻ (3)

Here, the higher the speed of mixing, the smaller the amounts of I₂ and I₃⁻ produced. Therefore, the lower the ultraviolet absorbance by I₃⁻, the better the mixing performance is evaluated.

FIG. 8 and Table 1 represent a relationship between a total flow rate of liquid A and liquid B and ultraviolet absorbance (λ = 352 nm) by I₃⁻.

### [Tab. 1]

**Table 1**

| | | | | | | | |
|---|---|---|---|---|---|---|---|
| Inner tube | A (salt) | mL/min | 5 | 9 | 15 | 25 | 50 |
| Outer tube | B (acid) | | 5 | 9 | 15 | 25 | 50 |
| Total flow rate | | | 10 | 18 | 30 | 50 | 100 |
| Absorbance | | mAU | 112 | 16 | 14 | 10 | 8 |

The absorbance at a total flow rate of 10 mL/min was approximately 110 mAU, which reveals that the reactor of the present invention has sufficient mixing performance. The absorbance lessens when the total flow rate is increased. For example, the absorbance becomes approximately 10 mAU at a total flow rate of 50 mL/min. This indicates that the apparatus of the present invention has a sufficient production capacity as a production plant.

### <EVALUATION 2 OF MIXING PERFORMANCE>

Mixing performance of the reactor was examined by the same method as used in Evaluation 1 except that liquid A and liquid B were flowed at a ratio of flow rates of 5:1. Results are indicated in Table 2. It is appreciated that the apparatus of the present invention has a sufficient production capacity as a production plant even at a greatly differing ratio of flow rates.

### [Tab. 2]

**Table 2**

| | | | |
|---|---|---|---|
| Inner tube | A (salt) | mL/min | 45 |
| Outer tube | B (acid) | | 9 |
| Total flow rate | | | 54 |
| Absorbance | | mAU | 25 |

### EXPLANATION OF REFERENCE SYMBOLS

31a, 31b, 41a, 41b, 51a, 51b: Fluid feed channel
32, 42, 52: Outer cylinder member
33, 43, 53: Fluid discharge channel
34, 44, 54: Core member
36, 46, 56: Reaction channel
35a, 35b, 45a, 45b, 55a, 55b: Stopper
38, 48, 58: Stopper

## Claims

1. A tubular flow reactor comprising:
at least two fluid feed channels (51a, 51b) made of a multi-walled tube for feeding at least two kinds of fluids to be used in a reaction;
a reaction channel (56) having an annular cross section that can cause the fluids to react while flowing the same therethrough; the reaction channel (56) being made of an outer cylinder member (52) and a core member (54), the core member (54) having an internal cavity (57);
the internal cavity (57) through which a refrigerant or heating medium can be circulated to allow heat-exchange with the fluids flowed through the reaction channel (56), wherein a movement of a substance is restricted between the internal cavity (57) and the reaction channel (56); and
a fluid discharge channel (53) for discharging a reaction product;
wherein the fluid feed channels (51a, 51b) are connected so as to communicate with an inlet of the reaction channel (56), and the fluid discharge channel (53) is connected so as to communicate with an outlet of the reaction channel (56).

2. The tubular flow reactor according to Claim 1, wherein the fluid feed channels (51a, 51b) are connected to the annular reaction channel (56) along a peripheral tangential direction thereof.

3. The tubular flow reactor according to Claim 1, wherein the fluid feed channels (51a, 51b) are connected to the annular reaction channel (56) along a direction generally perpendicular to a peripheral surface thereof.

4. The tubular flow reactor according to any one of Claims 1 to 3, wherein an outermost tube of the multi-walled tube has an inside diameter 0.5 to 1.5 times the average thickness of the annular reaction channel (56).

5. The tubular flow reactor according to any one of Claims 1 to 4, wherein the annular reaction channel (56) is formed by passing a tube whose outer surface has a circular cross section into the outer cylinder member whose inner surface has a circular cross section.

## Patentansprüche

1. Rohrströmungsreaktor, Folgendes umfassend:
mindestens zwei aus einem mehrwandigen Rohr bestehende Fluidzufuhrkanäle (51a, 51b), um mindestens zwei Arten von Fluiden zuzuführen, die in einer Reaktion verwendet werden,
einen Reaktionskanal (56) mit einem ringförmigen Querschnitt, der die Fluide dazu veranlassen kann, beim Hindurchströmen zu reagieren, wobei der Reaktionskanal (56) aus einem äußeren Zylinderelement (52) und einem Kernelement (54) besteht, wobei das Kernelement (54) einen inneren Hohlraum (57) aufweist,
den inneren Hohlraum (57), durch den ein Kühl- oder Heizmedium zirkulieren kann, um einen Wärmeaustausch mit den Fluiden zu ermöglichen, die durch den Reaktionskanal (56) strömen, wobei eine Bewegung einer Substanz zwischen dem inneren Hohlraum (57) und dem Reaktionskanal (56) eingeschränkt ist, und
einen Fluidablasskanal (53) zum Ablassen eines Reaktionsprodukts,
wobei die Fluidzufuhrkanäle (51a, 51b) derart verbunden sind, dass sie mit einem Einlass des Reaktionskanals (56) in Verbindung stehen, und der Fluidablasskanal (53) derart verbunden ist, dass er mit einem Auslass des Reaktionskanals (56) in Verbindung steht.

2. Rohrströmungsreaktor nach Anspruch 1, wobei die Fluidzufuhrkanäle (51a, 51b) entlang einer Richtung mit dem ringförmigen Reaktionskanal (56) verbunden sind, die tangential zu dessen Außenumfang liegt.

3. Rohrströmungsreaktor nach Anspruch 1, wobei die Fluidzufuhrkanäle (51a, 51b) entlang einer Richtung mit dem ringförmigen Reaktionskanal (56) verbunden sind, die im Allgemeinen senkrecht zu dessen Außenumfangsfläche liegt.

4. Rohrströmungsreaktor nach einem der Ansprüche 1 bis 3, wobei ein äußerstes Rohr des mehrwandigen Rohrs einen Innendurchmesser aufweist, der das 0,5- bis 1,5-Fache der durchschnittlichen Dicke des ringförmigen Reaktionskanals (56) beträgt.

5. Rohrströmungsreaktor nach einem der Ansprüche 1 bis 4, wobei der ringförmige Reaktionskanal (56) gebildet ist, indem ein Rohr, dessen Außenfläche einen kreisförmigen Querschnitt aufweist, in das äußere Zylinderelement eingeführt ist, dessen Innenfläche einen kreisförmigen Querschnitt aufweist.

## Revendications

1. Réacteur continu tubulaire comprenant :
au moins deux canaux d'alimentation en fluide (51a, 51b) réalisés avec un tube à plusieurs parois pour fournir au moins deux types de fluides à utiliser dans une réaction ;
un canal de réaction (56) ayant une section transversale annulaire qui peut amener les fluides à réagir tout en s'écoulant à travers ce dernier ; le canal de réaction (56) étant réalisé avec un élément cylindrique externe (52) et un élément de noyau (54), l'élément de noyau (54) ayant une cavité interne (57) ;
la cavité interne (57) à travers laquelle un réfrigérant ou un milieu chauffant peut être circulé pour permettre l'échange de chaleur avec les fluides qui s'écoulent à travers le canal de réaction (56), dans lequel un déplacement d'une substance est limité entre la cavité interne (57) et le canal de réaction (56) ; et
un canal de décharge de fluide (53) pour décharger un produit de réaction ;
dans lequel les canaux d'alimentation en fluide (51a, 51b) sont raccordés afin de communiquer avec une entrée du canal de réaction (56), et le canal de décharge de fluide (53) est raccordé afin de communiquer avec une sortie du canal de réaction (56).

2. Réacteur continu tubulaire selon la revendication 1, dans lequel les canaux d'alimentation en fluide (51a, 51b) sont raccordés au canal de réaction annulaire (56) le long de sa direction tangentielle périphérique.

3. Réacteur continu tubulaire selon la revendication 1, dans lequel les canaux d'alimentation en fluide (51a, 51b) sont raccordés au canal de réaction annulaire (56) le long d'une direction généralement perpendiculaire à sa surface périphérique.

4. Réacteur continu tubulaire selon l'une quelconque des revendications 1 à 3, dans lequel le tube situé le plus à l'extérieur du tube à plusieurs parois a un diamètre intérieur de 0,5 à 1,5 fois l'épaisseur moyenne du canal de réaction annulaire (56).

5. Réacteur continu tubulaire selon l'une quelconque des revendications 1 à 4, dans lequel le canal de réaction annulaire (56) est formé en faisant passer un tube dont la surface externe a une section transversale circulaire dans l'élément cylindrique externe dont la surface interne a une section transversale circulaire.
